# EUROPEAN PATENT SPECIFICATION

(11) **EP 2 472 085 B1**
(45) Date of publication and mention of the grant of the patent: **06.07.2016**
(21) Application number: 11250943.5
(22) Date of filing: 28.12.2011
(51) Int. Cl.: F01D 17/10, F02C 9/18

(54) **Gas turbine engine with bleed air system**
Gasturbinenmotor mit Entlüftungsstelle
Moteur à turbine à gaz avec système de prélèvement d'air

(30) Priority: 30.12.2010 US 201013428714
(43) Date of publication of application: 04.07.2012
(73) Proprietor: Rolls-Royce North American Technologies, Inc., Indianapolis, IN 46241 (US)
(72) Inventor: Clark, Robert Earl, Plainfield, Indiana 46168 (US); Clough, Joshua Alan, Indianapolis, Indiana 46256 (US)
(74) Representative: Roberts, Peter David

(56) References cited:
- EP-A2- 1 770 331
- GB-A- 2 251 657
- US-A1- 2010 175 387
- US-A1- 2010 286 889

## Description

### Cross Reference to Related Applications

The present application claims benefit of U.S. Provisional Patent Application No. 61/428,714, filed December 30, 2010, entitled GAS TURBINE ENGINE WITH BLEED AIR SYSTEM.

### Field of the Invention

The present invention relates to gas turbine engines, and more particularly, to gas turbine engines having bleed air systems.

### Background

Gas turbine engine bleed air systems remain an area of interest. Some existing systems have various shortcomings, drawbacks, and disadvantages relative to certain applications. Accordingly, there remains a need for further contributions in this area of technology. Document US 2010/0286889 discloses a method of controlling variable extraction flow in a gas turbine engine.

### Summary

One embodiment of the present invention as defined in claim 1, is a unique gas turbine engine. further embodiment is a unique method for operating a gas turbine engine, as defined in claim 13.

### Brief Description of the Drawings

The description herein makes reference to the accompanying drawings wherein like reference numerals refer to like parts throughout the several views, and wherein:
FIG. 1 schematically illustrates some aspects of a non-limiting example of a gas turbine engine in accordance with an embodiment of the present invention.
FIG. 2 schematically illustrates some aspects of a non-limiting example of a three-spool gas turbine engine in accordance with an embodiment of the present invention.
FIG. 3 schematically illustrates some aspects of a non-limiting example of a two-spool gas turbine engine in accordance with an embodiment of the present invention.
FIG. 4 schematically illustrates some aspects of a non-limiting example of a two-spool gas turbine engine in accordance with an embodiment of the present invention.
FIG. 5 schematically illustrates some aspects of a non-limiting example of a bleed system in accordance with an embodiment of the present invention.
FIG. 6 illustrates some aspects of a non-limiting example of a vane/strut of a gas turbine engine in accordance with an embodiment of the present invention.

### Detailed Description

For purposes of promoting an understanding of the principles of the invention, reference will now be made to the embodiments illustrated in the drawings, and specific language will be used to describe the same. It will nonetheless be understood that no limitation of the scope of the invention is intended by the illustration and description of certain embodiments of the invention. In addition, any alterations and/or modifications of the illustrated and/or described embodiment(s) are contemplated as being within the scope of the present invention. Further, any other applications of the principles of the invention, as illustrated and/or described herein, as would normally occur to one skilled in the art to which the invention pertains, are contemplated as being within the scope of the present invention.

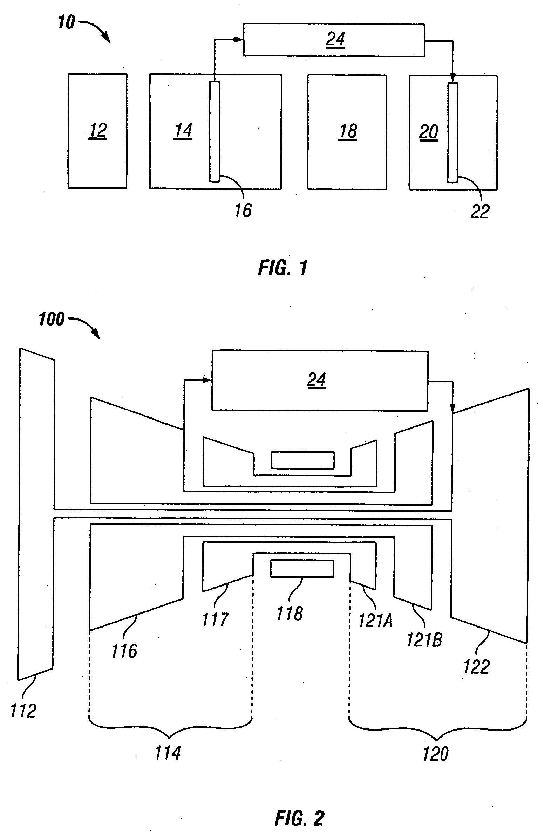

Referring to the drawings, and in particular FIG. 1, some aspects of a non-limiting example of a gas turbine engine 10 in accordance with an embodiment of the present invention are schematically depicted. In one form, engine 10 is a thrust-producing engine for aircraft propulsion. In other embodiments, engine 10 may be employed for other purposes, e.g., to power a generator, pump and/or other equipment. In one form, engine 10 is a turbofan engine. In other embodiments, engine 10 may be a turboprop engine, a turboshaft engine, a propfan engine, or any other type of thrust producing gas turbine engine. Gas turbine engine 10 includes or is coupled to a load absorber 12. Gas turbine engine 10 includes a compressor system 14 including a compressor stage 16; a combustion system 18; a turbine system 20 including a turbine stage 22; and a bleed system 24. In one form, load absorber 12 is a propulsor, e.g., a propulsor 12. In one form, propulsor 12 is a fan, i.e., a turbofan, and in various embodiments may or may not include one or more low pressure compressor stages. In other embodiments, propulsor 12 may take other forms, and may be, for example, a propeller system or other thrust producing rotor system. In still other embodiments, load absorber 12 may be any type of load absorber, and may be, for example and without limitation, a generator, a pump or compressor, and/or may be configured to power a ground-based or water-borne vehicle.

Compressor system 14 is a multistage gas turbine engine compressor system, of which compressor stage 16 is an intermediate compressor stage, i.e., fluidly disposed between the lowest pressure compressor stage (including any compressor stage that rotates with propulsor 12, for such embodiments so equipped) and the highest pressure compressor stage of compressor system 14. In various embodiments, compressor system 14 may include one or more rotors operating at the same or different speeds.

Combustion system 18 is in fluid communication with compressor system 14. Combustion system 18 may be any suitable gas turbine engine combustion system. Turbine system 20 is in fluid communication with combustion system 18. Turbine system 20 is a multistage gas turbine engine turbine system, of which turbine stage 22 is an intermediate turbine stage, i.e., disposed downstream of the highest pressure turbine stage of turbine system 20. In typical embodiments, turbine stage 22 is a low pressure turbine stage, although in other embodiments, turbine stage 22 may not be considered a low pressure turbine stage. Turbine stage 22 operates at a lower pressure than compressor stage 16. Turbine stage 22 is drivingly coupled to load absorber 12, e.g., a turbofan. Compressor system 14, combustion system 18 and turbine system 20 operate as in conventional gas turbine engines, except for the use of bleed system 24, some embodiments of which are described herein.

Bleed system 24 is configured to bleed pressurized air from compressor stage 16 and to deliver the bleed air to the turbine stage 22 in response to a discharge temperature of compressor system 14 (e.g., the exit total temperature of the final compressor stage of compressor system 14) reaching a predetermined temperature limit. In various embodiments, bleed system 24 may deliver the bleed air to other turbine stages in addition to turbine stage 22. By providing the bleed air to turbine stage 22, turbine stage 22 and turbine stages downstream of turbine stage 22 receive an increased amount of engine 10's working fluid under pressure, from which turbine stage 22 and turbine stages downstream of turbine stage 22 may extract additional power for driving load absorber 12 than had the bleed air not been provided. Thus, some aspects of the present invention include not only preventing an over-temperature condition in compressor system 14 by controlling compressor system 14 discharge temperature relative to the predetermined temperature limit, but also include simultaneously increasing the amount of power provided to load absorber 12. In one form, the predetermined temperature limit represents a design upper temperature limit of the final stage of compressor system 14, e.g., designated as such for life determination purposes for one or more components compressor system 14. Bleed system 24 may be employed in many different gas turbine engine 10 configurations, only a few of which are illustrated in FIGS. 2-4.

Referring to FIG. 2, some aspects of a non-limiting example of a three-spool gas turbine engine 100 in accordance with an embodiment of the present invention is schematically depicted. Engine 100 represents one of many possible configurations of engine 10 of FIG. 1. Engine 100 includes a turbofan 112, a compressor system 114, including an intermediate pressure (IP) compressor 116 and a high pressure (HP) compressor 117; a combustion system 118, and a turbine system 120, including an HP turbine 121A, and IP turbine 121B and a low pressure (LP) turbine 122. It will be noted that some reference numerals in FIG. 2 correspond to the reference numerals for like parts of FIG. 1, with the addition of a numerical value of 100 to the reference numerals of FIG. 1 to achieve the reference numerals in FIG. 2. For example, load absorber 12 of FIG. 1 is represented by fan 112 of FIG. 2; compressor stage 16 of FIG. 1 is represented in the embodiment of FIG. 2 as IP compressor 116; and turbine stage 22 of FIG. 1 is represented as LP turbine 122 in FIG. 2. In one form, IP compressor 116 includes a plurality of compressor stages. In other embodiments, IP compressor 116 may include only a single compressor stage. In one form, LP turbine 122 includes a plurality of turbine stages. In other embodiments, LP turbine 122 may include only a single turbine stage.

IP compressor 116 is in fluid communication with fan 112. HP compressor 117 is in fluid communication with IP compressor 116. Combustor 118 is in fluid communication with HP compressor 117. HP turbine 121A is drivingly coupled to HP compressor 117 and in fluid communication with combustion system 118. IP turbine 121B is driving coupled to the IP compressor and is in fluid communication with HP turbine 121A. LP turbine 122 is coupled to fan 112, and is in fluid communication with IP turbine 121B. Engine 100 also includes bleed system 24, which in the embodiment of FIG. 2 is configured to bleed pressurized air from the discharge of IP compressor 116 and/or other IP compressor 116 compressor stages, and to deliver the bleed air to one or more turbine stages of LP turbine 122 in response to the discharge temperature of HP compressor 117 reaching a predetermined temperature limit. By providing the bleed air to LP turbine 122, LP turbine 122 receives an increased amount of engine 100's working fluid under pressure, from which LP turbine 122 may extract additional power for driving fan 112 than had the bleed air not been provided. Thus, some aspects of the present invention include not only preventing an over-temperature condition in compressor system 114, but also include simultaneously increasing the amount of power provided to fan 112, thereby increasing the thrust output of engine 100.

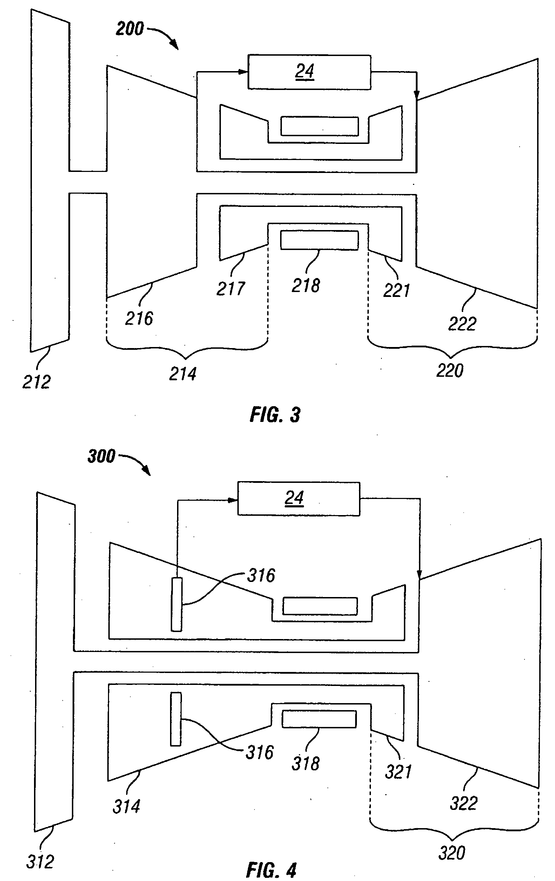

Referring to FIG. 3, some aspects of a non-limiting example of a two-spool gas turbine engine 200 in accordance with an embodiment of the present invention is schematically depicted. Engine 200 represents one of many possible configurations of engine 10 of FIG. 1. Engine 200 includes a turbofan 212, a compressor system 214, including an LP compressor 216 and an HP compressor 217; a combustion system 218, and a turbine system 220, including an HP turbine 221 and an LP turbine 222. It will be noted that some reference numerals in FIG. 3 correspond to the reference numerals for like parts of FIG. 1, with the addition of a numerical value of 200 to the reference numerals of FIG. 1 to achieve the reference numerals in FIG. 3. For example, load absorber 12 of FIG. 1 is represented by fan 212 of FIG. 3; compressor stage 16 of FIG. 1 is represented in the embodiment of FIG. 3 as LP compressor 216; and turbine stage 22 of FIG. 1 is represented as LP turbine 222 in FIG. 3. In one form, LP compressor 216 includes a plurality of compressor stages. In other embodiments, LP compressor 216 may include only a single compressor stage. In one form, LP turbine 222 includes a plurality of turbine stages. In other embodiments, LP turbine 222 may include only a single turbine stage.

LP compressor 216 is in fluid communication with fan 212. HP compressor 217 is in fluid communication with LP compressor 216. Combustor 218 is in fluid communication with HP compressor 217. HP turbine 221 is drivingly coupled to HP compressor 217 and in fluid communication with combustion system 218. LP turbine 222 is drivingly coupled to LP compressor 216 and fan 212, and is in fluid communication with HP turbine 221. Engine 200 also includes bleed system 24, which in the embodiment of FIG. 3 is configured to bleed pressurized air from the discharge of LP compressor 216 and/or other LP compressor 216 compressor stages, and to deliver the bleed air to one or more turbine stages of LP turbine 222 in response to the discharge temperature of HP compressor 217 reaching a predetermined temperature limit. By providing the bleed air to LP turbine 222, LP turbine 222 receives an increased amount of engine 200's working fluid under pressure, from which LP turbine 222 may extract additional power for driving fan 212 than had the bleed air not been provided. Thus, some aspects of the present invention include not only preventing an over-temperature condition in compressor system 214, but also include simultaneously increasing the amount of power provided to fan 212, thereby increasing the thrust output of engine 200.

Referring to FIG. 4, some aspects of a non-limiting example of a two-spool gas turbine engine 300 in accordance with an embodiment of the present invention is schematically depicted. Engine 300 represents one of many possible configurations of engine 10 of FIG. 1. Engine 300 includes a turbofan 312, a compressor 314, including an intermediate compressor stage 316; a combustion system 318, and a turbine system 320, including an HP turbine 321 and an LP turbine 322. It will be noted that some reference numerals in FIG. 4 correspond to the reference numerals for like parts of FIG. 1, with the addition of a numerical value of 300 to the reference numerals of FIG. 1 to achieve the reference numerals in FIG. 4. For example, load absorber 12 of FIG. 1 is represented by fan 312 of FIG. 4; compressor stage 16 of FIG. 1 is represented in the embodiment of FIG. 4 as intermediate compressor stage 316; and turbine stage 22 of FIG. 1 is represented as LP turbine 322 in FIG. 3. Compressor 314 includes a plurality of compressor stages, only one of which is intermediate compressor stage 316, and another of which is the final compressor stage (not shown). In one form, LP turbine 322 includes a plurality of turbine stages. In other embodiments, LP turbine 322 may include only a single turbine stage.

Compressor 314 is in fluid communication with fan 312. Combustor 318 is in fluid communication with compressor 314. HP turbine 321 is drivingly coupled to compressor 314 and in fluid communication with combustion system 318. LP turbine 322 is drivingly coupled to compressor 314 and fan 312, and is in fluid communication with HP turbine 321. Engine 300 also includes bleed system 24, which in the embodiment of FIG. 4 is configured to bleed pressurized air from intermediate compressor stage 316 (alone or in combination with other intermediate compressor stages of compressor 314), and to deliver the bleed air to one or more turbine stages of LP turbine 322 in response to the discharge temperature of compressor 314 reaching a predetermined temperature limit. By providing the bleed air to LP turbine 322, LP turbine 322 receives an increased amount of engine 300's working fluid under pressure, from which LP turbine 322 may extract additional power for driving fan 312 than had the bleed air not been provided. Thus, some aspects of the present invention include not only preventing an over-temperature condition in compressor system 314, but also include simultaneously increasing the amount of power provided to fan 312, thereby increasing the thrust output of engine 300.

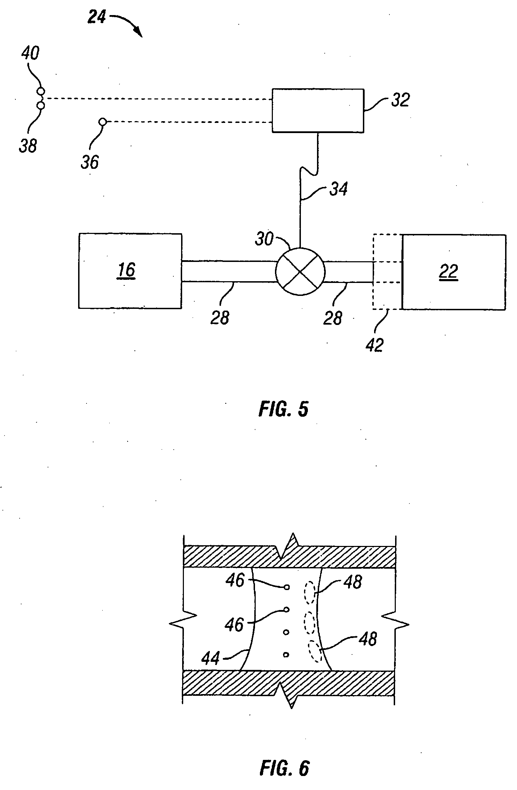

Referring to FIG. 5, some aspects of a non-limiting example of bleed system 24 in accordance with an embodiment of the present invention is described. Bleed system 24 includes passages 28, a valve 30 and a controller 32. Passages 28 may take one or more of many forms, including pipes, tubing, internal passages inside other engine structures and the like. One passage 28 is coupled to and in fluid communication with intermediate compressor stage 16 at one end, and with valve 30 at the other end. Compressor stage 16 may be, for example and without limitation, the final compressor stage and/or one or more other compressor stages of IP compressor 116 (FIG. 2); the final compressor stage and/or one or more other compressor stages of LP compressor 216 (FIG. 3); or intermediate compressor stage 316 and/or one or more other compressor stages of compressor 314 (FIG. 4). A passage 28 is also coupled to and in fluid communication with turbine stage 22 at one end and with valve 30 at the other end. Turbine stage 22 may be, for example and without limitation, the initial and/or one or more subsequent turbine stages of LP turbine 122 (FIG. 2); the initial and/or subsequent turbine stages of LP turbine 222 (FIG. 3); or the initial and/or one or more subsequent turbine stages of LP turbine 322 (FIG. 4). The pressure at the compressor stage from which the is extracted is higher than the pressure at the turbine stage(s) where the air is delivered. For example, in one form, the total pressure at intermediate compressor stage 16 where the bleed air is extracted is greater than the total and/or static pressure at turbine stage 22 at the location where the bleed air is delivered via passage 28 to turbine stage 22. In other embodiments, the static pressure at intermediate compressor stage 16 where the bleed air is extracted is greater than the total and/or static pressure at the location where the bleed air is delivered via passage 28 to turbine stage 22.

Valve 30 is configured to regulate the flow rate of the bleed air that is extracted from compressor stage 16 and provided to turbine stage 22 via passages 28. In one form, valve 30 is configured to selectively prevent or allow the flow of bleed air from compressor stage 16. In one form, valve 30 is configured to regulate the bleed air flow rate to a desired level. Valve 30 is controlled by controller 32. Valve 30 may take any suitable form, and may be, for example and without limitation, a butterfly valve, a gate valve, a poppet valve or any other suitable valve type. Valve 30 is actuated by an actuation mechanism (not shown) under the direction of controller 32.

Controller 32 is communicatively coupled to valve 30 via a communications link 34. Communications link 34 may take any suitable form, and may be, for example, a wired and/or wireless and/or optical link capable of transmitting control signals (and feedback signals, depending upon the configuration of valve 30) to (and from) valve 30. In some embodiments, link 34 may also provide electrical power for actuating valve 30. Controller 32 is configured to execute program instructions to control valve 30 to turn the bleed air on and off, and to regulate the bleed air flow rate to a desired level, based on compressor 14 discharge temperature, which is the temperature at the final compressor stage of compressor 14 (e.g., the final compressor stage of HP compressor 117, HP compressor 217 or compressor 314). In one form, controller 32 is microprocessor based and the program instructions are in the form of software stored in a memory (not shown). However, it is alternatively contemplated that controller 32 and the program instructions may be in the form of any combination of software, firmware and hardware, including state machines, and may reflect the output of discreet devices and/or integrated circuits, which may be co-located at a particular location or distributed across more than one location, including any digital and/or analog devices configured to achieve the same or similar results as a processor-based controller executing software or firmware based instructions. In one form, controller 32 is a gas turbine engine controller, such as a full authority digital electronic control (FADEC) unit. In other embodiments, controller 32 may take any suitable form, and in some embodiments may be a dedicated controller for operating valve 30.

Controller 32 is configured to control valve 30 based on comparing compressor 14 discharge temperature with a predetermined temperature limit for compressor 14 discharge temperature. In various embodiments, the compressor 14 discharge temperature may be determined based on a measured compressor 14 discharge temperature or a calculated compressor 14 discharge temperature. For example, in one form, controller 32 is communicatively coupled to a compressor discharge temperature sensor 36, which provides data reflective of a measured compressor 14 discharge temperature to controller 32. During operation, controller 32 compares the compressor 14 discharge temperature based on sensor 36 to the predetermined temperature limit for purposes of controlling valve 30, including commanding valve 30 to open to allow the flow of bleed air to turbine stage 22 and in some embodiments, regulating the bleed air flow rate to a desired level.

In another embodiment, controller 32 is communicatively coupled to a pressure sensor 38 and a temperature sensor 40. Sensors 38 and 40 may be, for example, located at the engine inlet or otherwise provide data pertaining to engine inlet conditions. In such embodiments, controller 32 determines a calculated compressor 14 discharge temperature, e.g., based on the output of sensors 38 and 40, and on known characteristics of compressor 14. During operation, controller 32 compares the calculated compressor 14 discharge temperature with the predetermined temperature limit for purposes of controlling valve 30, including commanding valve 30 to open to allow the flow of bleed air to turbine stage 22 and in some embodiments, regulating the bleed air flow rate to a desired level. In still other embodiments, controller 32 may obtain compressor 14 discharge temperature data via other means, e.g., directly and/or indirectly measured and/or calculated, and may control valve 30 based on comparing the obtained compressor 14 discharge temperature data with the predetermined temperature limit. In some embodiments, the determination of compressor 14 discharge temperature may be made prior to starting engine 10, e.g., calculated based on sensed or anticipated engine inlet conditions, whereas in other embodiments, the determination of compressor 14 discharge temperature may be made after starting engine 10.

The bleed air extracted from intermediate compressor stage 16 may be delivered to turbine stage 22 in via any convenient manner, which may vary, e.g., depending upon the amount of bleed air that is delivered to turbine stage 22. For example, in some embodiments, the bleed air may be dumped into the core flowpath upstream of turbine stage 22, e.g., via openings in one or more turbine system components (not shown). As another example, in some embodiments, e.g., where the bleed air flow rate is in the range of 5%-15% of core engine flow or greater, the bleed air may be delivered to turbine stage 22 via a mixer 42 that is configured to mix core gas flow with the bleed air flow for provision of the bleed air flow to turbine stage 22.

Referring to FIG. 6, in another example, the bleed air may be provided to turbine stage 22 via openings in one or more turbine vanes and/or struts 44 upstream of or within turbine stage 22. For example, where a relatively low amount of bleed air is provided to turbine stage 22, e.g., a bleed flow rate in the range of 1%-5% of core flow, the bleed air may be provided via existing cooling air discharge openings 46 in turbine vanes and/or struts 44. Where higher bleed air flow rates are desired, e.g., a bleed flow rate in the range of 2%-10% of core flow, additional openings, e.g., trailing edge openings 48 may be added to turbine vanes and/or struts 44 to accommodate the additional bleed air flow. It will be understood that the bleed flow rates mentioned herein are exemplary only, and that bleed rates in particular embodiments may or may not be within the ranges mentioned herein.

Embodiments of the present invention include a gas turbine engine, comprising: a fan; an intermediate pressure (IP) compressor in fluid communication with the fan; a high pressure (HP) compressor in fluid communication with the IP compressor; a combustor in fluid communication with the HP compressor; an HP turbine coupled to the HP compressor and in fluid communication with the combustor; an IP turbine coupled to the IP compressor and in fluid communication with the HP turbine; a low pressure (LP) turbine coupled to the fan and in fluid communication with the IP turbine; and a bleed system configured to bleed pressurized air from the IP compressor and deliver the bleed air to the LP turbine in response to a discharge temperature of the HP compressor reaching a predetermined temperature limit.

In a refinement, the bleed system includes a valve configured to regulate a flow rate of the bleed air from the IP compressor.

In another refinement, the valve is configured to selectively prevent a flow of the bleed air from the IP compressor.

In yet another refinement, the gas turbine engine further comprises a controller configured to execute program instructions to control the valve to regulate a bleed air flow rate.

In still another refinement, the controller is configured to control the valve based on comparing the discharge temperature of the HP compressor with the predetermined temperature limit.

In yet still another refinement, the controller is configured to control the valve based on determining a calculated HP compressor discharge temperature based on engine inlet conditions, and comparing the calculated discharge temperature with the predetermined temperature limit.

In a further refinement, a total pressure at an IP compressor bleed location from which the bleed air is extracted is higher than the total pressure at an injection location in the LP turbine where the bleed air is delivered to the LP turbine.

In a yet further refinement, the LP turbine includes turbine vanes having air discharge openings, and wherein the bleed air is discharged through the air discharge openings.

In a still further refinement, the gas turbine engine further comprises a mixer positioned at the LP turbine, wherein the mixer is adapted to receive the bleed air and mix the bleed air with core gas flow passing through the LP turbine.

Embodiments of the present invention include a gas turbine engine, comprising: a compressor system having a plurality of compressor stages including an intermediate compressor stage and culminating in a final compressor stage; a combustor in fluid communication with the final compressor stage; a turbine system having a plurality of turbine stages including a low pressure turbine stage, wherein the low pressure turbine stage operates at a lower pressure than the intermediate compressor stage, and including an initial turbine stage in fluid communication with the combustor; and a bleed system configured to bleed pressurized air from the intermediate compressor stage and deliver the bleed air to the low pressure turbine stage in response to a discharge temperature of the compressor system reaching a predetermined temperature limit.

In a refinement, the gas turbine engine is configured as a three-spool engine, wherein the compressor system includes an intermediate pressure (IP) compressor; wherein the intermediate compressor stage is part of the IP compressor; wherein the turbine system includes a low pressure (LP) turbine; and wherein the low pressure turbine stage is part of the LP turbine.

In another refinement, the gas turbine engine is configured as a two-spool engine, wherein the compressor system includes a high pressure (HP) compressor; wherein the intermediate compressor stage is part of the HP compressor; wherein the turbine system includes a low pressure (LP) turbine; and wherein the low pressure turbine stage is part of the LP turbine.

In yet another refinement, the bleed system includes ducting configured to deliver the bleed air to the low pressure turbine stage.

In still another refinement, the bleed system includes a valve configured to regulate a flow rate of the bleed air from the IP compressor.

In yet still another refinement, the gas turbine engine further comprises a controller configured to execute program instructions to control the valve to regulate a bleed air flow rate.

In a further refinement, the controller is configured to control the valve based on comparing the discharge temperature of the compressor system with the predetermined temperature limit.

In a yet further refinement, the controller is configured to control the valve based on determining a calculated compressor system discharge temperature based on engine inlet conditions, and comparing the calculated discharge temperature with the predetermined temperature limit.

Embodiments of the present invention include a method for operating a gas turbine engine, comprising: determining a compressor discharge temperature; comparing the compressor discharge temperature with a compressor discharge temperature limit; bleeding air from an intermediate compressor stage in response to the comparison; and delivering the bleed air to a turbine stage having a lower operating pressure than the intermediate compressor stage.

In a refinement, the determination of the compressor discharge temperature includes measuring the compressor discharge temperature.

In another refinement, the determination of the compressor discharge temperature includes calculating the compressor discharge temperature based on engine inlet conditions.

In yet another refinement, the gas turbine engine is configured as a three-spool engine having a fan, and intermediate pressure (IP) compressor, a high pressure (HP) compressor, an HP turbine coupled to the HP compressor, an IP turbine coupled to the IP compressor, and a low pressure (LP) turbine coupled to the fan; wherein the intermediate compressor stage is part of the IP compressor; and wherein the turbine stage is part of the LP turbine.

In still another refinement, the gas turbine engine is configured as a two-spool engine having a propulsor, a high pressure (HP) compressor, an HP turbine coupled to the HP compressor, and a low pressure (LP) turbine coupled to the propulsor; wherein the intermediate compressor stage is part of the HP compressor; and wherein the turbine stage is part of the LP turbine.

In a further refinement, the gas turbine engine is configured as a two-spool engine having a low pressure (LP) compressor, a high pressure (HP) compressor, an HP turbine coupled to the HP compressor, and a low pressure (LP) turbine coupled to the LP compressor; wherein the intermediate compressor stage is part of the LP compressor; and wherein the turbine stage is part of the LP turbine.

While the invention has been described in connection with what is presently considered to be the most practical and preferred embodiment, it is to be understood that the invention is not to be limited to the disclosed embodiment(s), but on the contrary, is intended to cover various modifications and equivalent arrangements

Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In

## Claims

1. A gas turbine engine (100), comprising:
a fan (112);
an intermediate pressure (IP) compressor (116) in fluid communication with the fan (112);
a high pressure (HP) compressor (117) in fluid communication with the IP compressor (116);
a combustor (118) in fluid communication with the HP compressor (117);
an HP turbine (121A) coupled to the HP compressor (117) defining an HP spool, the HP turbine (121A) being in fluid communication with the combustor (118);
an IP turbine (121B) coupled to the IP compressor (116) defining an IP spool, the IP turbine (121B) being in fluid communication with the HP turbine (121 A);
an LP turbine (122) coupled to the fan (112) defining an LP spool, the LP turbine (122) being in fluid communication with the IP turbine (121B);
wherein the HP spool, IP spool and LP spool are each independently rotatable; and
a bleed system (24) configured to bleed pressurized air from the IP compressor (116) and deliver the bleed air to the LP turbine (122) in response to a discharge temperature of the HP compressor (117) reaching a predetermined temperature limit.

2. The gas turbine engine of claim 1, wherein a total pressure at an IP compressor bleed location from which the bleed air is extracted is higher than the total pressure at an injection location in the LP turbine (122) where the bleed air is delivered to the LP turbine (122).

3. The gas turbine engine of claim 1, wherein the LP turbine (122) includes turbine vanes having air discharge openings, and wherein the bleed air is discharged through the air discharge openings.

4. The gas turbine engine of claim 1, further comprising a mixer (42) positioned at the LP turbine (122), wherein the mixer (42) is adapted to receive the bleed air and mix the bleed air with core gas flow passing through the LP turbine.

5. The gas turbine engine of claim 1, wherein the bleed system (24) includes a valve (30) configured to regulate a flow rate of the bleed air from the IP compressor (116).

6. The gas turbine engine of claim 5, further comprising a controller (32) configured to execute program instructions to control the valve (30) to regulate a bleed air flow rate.

7. The gas turbine engine of claim 6, wherein the controller (32) is configured to control the valve (30) based on comparing the discharge temperature of the compressor system and with the predetermined temperature limit.

8. The gas turbine engine of claim 6, wherein the controller (32) is configured to control the valve (30) based on determining a calculated compressor system discharge temperature based on engine inlet conditions, and comparing the calculated compressor system discharge temperature with the predetermined temperature limit.

9. The gas turbine engine of claim 6, wherein the controller (32) is configured to control the valve (30) based on comparing the discharge temperature of the HP compressor (117) with the predetermined temperature limit.

10. The gas turbine engine of claim 6, wherein the controller (32) is configured to control the valve (30) based on determining a calculated HP compressor (117) discharge temperature based on engine inlet conditions, and comparing the calculated HP compressor discharge temperature with the predetermined temperature limit.

11. A method for operating a gas turbine engine (100), comprising:
determining a compressor discharge temperature of a compressor connected to a first independently rotatable spool;
comparing the compressor discharge temperature with a compressor discharge temperature limit;
bleeding air from a second compressor connected to a second independently rotatable spool in response to the comparison; and
delivering the bleed air to a turbine stage having a lower operating pressure than the bleed air from the second compressor.

12. The method of claim 11, wherein the determination of the compressor discharge temperature includes measuring the compressor discharge temperature.

13. The method of claim 11, wherein the determination of the compressor discharge temperature includes calculating the compressor discharge temperature based on engine inlet conditions.

14. The method of claim 11, wherein the gas turbine engine is configured as a three-spool engine having a fan (112), and intermediate pressure (IP) compressor (116), a high pressure (HP) compressor (117), an HP turbine (121A) coupled to the HP compressor (117), an IP turbine (121 B) coupled to the IP compressor (116), and an LP turbine (122) coupled to the fan (112); wherein the second compressor is part of the IP compressor (116); and wherein the turbine stage is part of the LP turbine (122).

15. The method of claim 11, wherein the gas turbine engine is configured as one of:
a two-spool engine (200) having a propulsor (212), a high pressure (HP) compressor (217), an HP turbine (221) coupled to the HP compressor (217), and a low pressure (LP) turbine (222) coupled to the propulsor (212); wherein the second compressor is part of the HP compressor (217); and wherein the turbine stage is part of the LP turbine (222); or
a two-spool engine (200) having a low pressure (LP) compressor (216), a high pressure (HP) compressor (217), an HP turbine (221) coupled to the HP compressor (217), and an LP turbine (222) coupled to the LP compressor (216); wherein the second compressoris part of the LP compressor (216); and wherein the turbine stage is part of the LP turbine (222).

## Patentansprüche

1. Gasturbinenmotor (100), der Folgendes umfasst:
einen Lüfter (112);
einen Zwischendruck-(IP)-Kompressor (116) in Fluidverbindung mit dem Lüfter (112);
einen Hochdruck-(HP)-Kompressor (117) in Fluidverbindung mit dem IP-Kompressor (116);
eine Brennkammer (118) in Fluidverbindung mit dem HP-Kompressor (117);
eine HP-Turbine (121A), die mit dem HP-Kompressor (117) gekoppelt ist und eine HP-Spule definiert, wobei die HP-Turbine (121A) in Fluidverbindung mit der Brennkammer (118) ist;
eine IP-Turbine (121B), die mit dem IP-Kompressor (116) gekoppelt ist und eine IP-Spule definiert, wobei die IP-Turbine (121B) in Fluidverbindung mit der HP-Turbine (121A) ist;
eine LP-Turbine (122), die mit dem Lüfter (112) gekoppelt ist und eine LP-Spule definiert, wobei die LP-Turbine (122) in Fluidverbindung mit der IP-Turbine (121B) ist;
wobei die HP-Spule, die IP-Spule und die LP-Spule jeweils unabhängig gedreht werden können; und
ein Entlüftungssystem (24), konfiguriert zum Ablassen von Druckluft aus dem IP-Kompressor (116) und zum Zuführen der Entlüftungsluft zur LP-Turbine (122) als Reaktion darauf, dass eine Ablasstemperatur des HP-Kompressors (117) eine vorbestimmte Temperaturgrenze erreicht.

2. Gasturbinenmotor nach Anspruch 1, wobei ein Gesamtdruck an einer IP-Kompressorentlüftungsstelle, von der die Entlüftungsluft abgezogen wird, höher ist als der Gesamtdruck an einer Injektionsstelle in der LP-Luft (122), wo die Entlüftungsluft der LP-Turbine (122) zugeführt wird.

3. Gasturbinenmotor nach Anspruch 1, wobei die LP-Turbine (122) Turbinenschaufeln mit Luftablassöffnungen aufweist und wobei die Entlüftungsluft durch die Luftablassöffnungen abgelassen wird.

4. Gasturbinenmotor nach Anspruch 1, der ferner einen an der LP-Turbine (122) positionierten Mixer (42) umfasst, wobei der Mixer (42) zum Aufnehmen der Entlüftungsluft und zum Mischen der Entlüftungsluft mit durch die LP-Turbine strömendem Kerngasfluss ausgelegt ist.

5. Gasturbinenmotor nach Anspruch 1, wobei das Entlüftungssystem (24) ein Ventil (30) aufweist, das zum Regulieren einer Strömungsrate der Entlüftungsluft aus dem IP-Prozessor (116) konfiguriert ist.

6. Gasturbinenmotor nach Anspruch 5, der ferner einen Controller (32) umfasst, der zum Ausführen von Programmbefehlen zum Steuern des Ventils (30) zum Regulieren einer Entlüftungsluftströmungsrate konfiguriert ist.

7. Gasturbinenmotor nach Anspruch 6, wobei der Controller (32) zum Steuern des Ventils (30) auf der Basis eines Vergleichs der Ablasstemperatur des Kompressorsystems und mit der vorbestimmten Temperaturgrenze konfiguriert ist.

8. Gasturbinenmotor nach Anspruch 6, wobei der Controller (32) zum Steuern des Ventils (30) auf der Basis der Ermittlung einer berechneten Kompressorsystem-Ablasstemperatur auf der Basis von Motoreinlassbedingungen und zum Vergleichen der berechneten Kompressorsystem-Ablasstemperatur mit der vorbestimmten Temperaturgrenze konfiguriert ist.

9. Gasturbinenmotor nach Anspruch 6, wobei der Controller (32) zum Steuern des Ventils (30) auf der Basis des Vergleichens der Ablasstemperatur des HP-Kompressors (117) mit der vorbestimmten Temperaturgrenze konfiguriert ist.

10. Gasturbinenmotor nach Anspruch 6, wobei der Controller (32) zum Steuern des Ventils (30) auf der Basis der Ermittlung einer berechneten HP-Kompressor-(117)-Ablasstemperatur auf der Basis von Motoreinlassbedingungen und zum Vergleichen der berechneten HP-Kompressor-Ablasstemperatur mit der vorbestimmten Temperaturgrenze konfiguriert ist.

11. Verfahren zum Betreiben eines Gasturbinenmotors (100), das Folgendes beinhaltet:
Ermitteln einer Kompressorablasstemperatur eines Kompressors, der mit einer ersten unabhängig drehbaren Spule verbunden ist;
Vergleichen der Kompressorablasstemperatur mit einer Kompressorablasstemperaturgrenze;
Ablassen von Luft aus einem zweiten Kompressor, der mit einer zweiten unabhängig drehbaren Spule verbunden ist, als Reaktion auf den Vergleich; und
Zuführen der Entlüftungsluft zu einer Turbinenstufe mit einem niedrigeren Betriebsdruck als dem der Entlüftungsluft von dem zweiten Kompressor.

12. Verfahren nach Anspruch 11, wobei das Ermitteln der Kompressorablasstemperatur das Messen der Kompressorablasstemperatur beinhaltet.

13. Verfahren nach Anspruch 11, wobei das Ermitteln der Kompressorablasstemperatur das Berechnen der Kompressorablasstemperatur auf der Basis von Motoreinlassbedingungen beinhaltet.

14. Verfahren nach Anspruch 11, wobei der Gasturbinenmotor konfiguriert ist als
ein Dreispulen-Motor mit einem Lüfter (112) und einem Zwischendruck-(IP)-Kompressor (116), einem Hochdruck-(HP)-Kompressor (117), einer mit dem HP-Kompressor (117) gekoppelten HP-Turbine (121A), einer mit dem IP-Kompressor (116) gekoppelten IP-Turbine (121B) und einer mit dem Lüfter (112) gekoppelten LP-Turbine (122); wobei der zweite Kompressor Teil des IP-Kompressors (116) ist; und wobei die Turbinenstufe Teil der LP-Turbine (122) ist.

15. Verfahren nach Anspruch 11, wobei der Gasturbinenmotor konfiguriert ist als eines der Folgenden:
ein Zweispulen-Motor (200) mit einem Propulsor (212), einem Hochdruck-(HP)-Kompressor (217), einer mit dem HP-Kompressor (217) gekoppelten HP-Turbine (221) und einer mit dem Propulsor (212) gekoppelten Niederdruck-(LP)-Turbine (222); wobei der zweite Kompressor Teil des HP-Kompressors (217) ist; und wobei die Turbinenstufe Teil der LP-Turbine (222) ist; oder
ein Zweispulen-Motor (200) mit einem Niederdruck-(LP)-Kompressor (216), einem Hochdruck-(HP)-Kompressor (217), einer mit dem HP-Kompressor (217) gekoppelten HP-Turbine (221) und einer mit dem LP-Kompressor (216) gekoppelten LP-Turbine (222); wobei der zweite Kompressor Teil des LP-Kompressors (216) ist; und wobei die Turbinenstufe Teil der LP-Turbine (222) ist.

## Revendications

1. Moteur à turbine à gaz (100), comprenant :
un ventilateur (112) ;
un compresseur (116) à pression intermédiaire (IP), en communication de fluide avec le ventilateur (112) ;
un compresseur (117) haute pression (117), en communication de fluide avec le compresseur IP (116) ;
une chambre de combustion (118) en communication de fluide avec le compresseur HP (117) ;
une turbine HP (121A) accouplée au compresseur HP (117), définissant un corps HP, la turbine HP (121A) étant en communication de fluide avec la chambre de combustion (118) ;
une turbine IP (121B) accouplée au compresseur IP (116), définissant un corps IP, la turbine IP (121B) étant en communication de fluide avec la turbine HP (121A) ;
une turbine LP (basse pression) (122) accouplée au ventilateur (112) définissant un corps LP, la turbine LP (122) étant en communication de fluide avec la turbine IP (121B) ;
dans lequel le corps HP, le corps IP et le corps LP peuvent chacun être tournés indépendamment ; et
un système de prélèvement (24), configuré de sorte à prélever l'air sous pression du compresseur IP (116) et à transférer l'air prélevé vers la turbine LP (122) en réponse à une température de refoulement du compresseur HP (117) atteignant une limite de température prédéterminée.

2. Moteur à turbine à gaz selon la revendication 1, dans lequel une pression totale au niveau d'un emplacement de prélèvement du compresseur HP, à partir duquel l'air prélevé est extrait, est supérieure à la pression totale au niveau d'un emplacement d'injection dans la turbine LP (122) où l'air prélevé est transféré vers la turbine LP (122).

3. Moteur à turbine à gaz selon la revendication 1, dans lequel la turbine LP (122) englobe des aubes de turbine comportant des ouvertures de décharge d'air, et dans lequel l'air prélevé est déchargé à travers les ouvertures de décharge d'air.

4. Moteur à turbine à gaz selon la revendication 1, comprenant en outre un mélangeur (42) positionné au niveau de la turbine LP (122), le mélangeur (42) étant adapté pour recevoir l'air prélevé et pour mélanger l'air prélevé avec un écoulement de gaz primaire passant à travers la turbine LP.

5. Moteur à turbine à gaz selon la revendication 1, dans lequel le système de prélèvement (24) englobe une vanne (30), destinée à réguler le débit de l'air prélevé du compresseur IP (116).

6. Moteur à turbine à gaz selon la revendication 5, comprenant en outre un dispositif de commande (32), destiné à exécuter des instructions de programme pour contrôler la vanne (30) afin de réguler un débit de l'air prélevé.

7. Moteur à turbine à gaz selon la revendication 6, dans lequel le dispositif de commande (32) est destiné à contrôler la vanne (30) sur la base d'une comparaison de la température de refoulement du système de compresseur avec la limite de température prédéterminée.

8. Moteur à turbine à gaz selon la revendication 6, dans lequel le dispositif de commande (32) est destiné à contrôler la vanne (30) sur la base de la détermination d'une température de refoulement calculée du système de compresseur basée sur des conditions d'admission du moteur, et d'une comparaison de la température de refoulement du système de compresseur calculée avec la limite de température prédéterminée.

9. Moteur à turbine à gaz selon la revendication 6, dans lequel le dispositif de commande (32) est destiné à contrôler la vanne (30) sur la base d'une comparaison de la température de refoulement du compresseur HP (118) avec la limite de température prédéterminée.

10. Moteur à turbine à gaz selon la revendication 6, dans lequel le dispositif de commande (32) est destiné à contrôler la vanne (30) sur la base de la détermination d'une température de refoulement calculée du compresseur HP (117) basée sur des conditions d'admission du moteur, et de la comparaison de la température de refoulement du compresseur HP calculée avec la limite de température prédéterminée.

11. Procédé d'actionnement d'un moteur à turbine à gaz (100), comprenant les étapes ci-dessous :
détermination d'une température de refoulement de compresseur d'un compresseur connecté à un premier corps à rotation indépendante ;
comparaison de la température de refoulement du compresseur avec une limite de la température de refoulement du compresseur ;
prélèvement de l'air d'un deuxième compresseur connecté à un deuxième corps à rotation indépendante en réponse à la comparaison ; et
transmission de l'air de prélèvement vers un étage de turbine ayant une pression opérationnelle inférieure à celle de l'air de prélèvement du deuxième compresseur.

12. Procédé selon la revendication 11, dans lequel l'étape de détermination de la température de refoulement du compresseur englobe la mesure de la température de refoulement du compresseur.

13. Procédé selon la revendication 11, dans lequel l'étape de détermination de la température de refoulement du compresseur englobe le calcul de la température de refoulement du compresseur sur la base de conditions d'admission du moteur.

14. Procédé selon la revendication 11, dans lequel le moteur à turbine à gaz est configuré sous forme d'un moteur à trois corps comportant un ventilateur (112), un compresseur (116) à pression intermédiaire, un compresseur (117) haute pression (HP) et une turbine HP (121A) accouplée au compresseur HP (117), une turbine IP (121B) accouplée au compresseur IP (116) et une turbine (122) LP (basse pression) accouplée au ventilateur (112), dans lequel le deuxième compresseur fait partie du compresseur IP (116), l'étage de la turbine faisant partie de la turbine LP (122).

15. Procédé selon la revendication 11, dans lequel le moteur à turbine à gaz a une des configurations ci-dessous :
un moteur à deux corps (200), comportant un propulseur (212), un compresseur (217) haute pression (HP), une turbine HP (221) accouplée au compresseur HP (217) et une turbine (222) basse pression (LP) accouplée au propulseur (212) ; dans lequel le deuxième compresseur fait partie du compresseur HP (217) ; et dans lequel l'étage de la turbine fait partie de la turbine (222) ;
un moteur à deux corps (200) comportant un compresseur (216) basse pression (LP), un compresseur (217) haute pression (HP), une turbine HP (221) accouplée au compresseur HP (217) et une turbine LP (222) accouplée au compresseur LP (216) ; dans lequel le deuxième compresseur fait partie du compresseur LP (216) ; et dans lequel l'étage de la turbine fait partie de la turbine LP (222).
